# EUROPEAN PATENT APPLICATION

(11) **EP 1 512 917 A2**
(43) Date of publication of application: **09.03.2005**
(21) Application number: 04021206.0
(22) Date of filing: 07.09.2004
(51) Int. Cl.: F24F 1/00

(54) **Air filter and air conditioner**

(30) Priority: 08.09.2003 JP 2003314870
(71) Applicant: MITSUBISHI DENKI KABUSHIKI KAISHA, Tokyo 100-8310 (JP)
(72) Inventor: Nakagawa, Hidetomo Mitsubishi Denki K. K., Tokyo 100-8310 (JP); Tanabe, Yoshihiro Mitsubishi Denki K. K., Tokyo 100-8310 (JP); Cho, Hideto Cho Sangyo Co., Ltd., Aso-Gun Tochigi 327-0324 (JP)
(74) Representative: Pfenning, Meinig & Partner GbR

(57) **Abstract**

The present invention aims to provide an air filter with a low cost by forming a honeycomb air filter which suppresses pressure loss, improves dust once filtration efficiency of the air filter, and increases dust collection amount. An air filter used for collecting dust, etc. is made by honeycomb weave having a rough surface and consisting of squares, of which each of the squares is formed by a combination of warp and the weft. A thread of the warp that floats the longest rises to the highest; a thread of the weft that floats the longest also rises the highest; the other threads of the warp and the weft gradually rise lower; and a plain weave part becomes the lowest valley. The air filter is woven by threads of the warp and the weft having diameters of equal to or less than 0.22 mm, a dimension of one square is made 9 to 12 mm, and a depth of the roughness is made equal to or greater than 2.5 mm by using equal to or greater than 40 threads of the warp and the weft per inch.

## Description

### BACKGROUND OF THE INVENTION

### Field of the Invention

The present invention relates to an air filter that is formed by thinning a fiber thread for increasing fiber amount per inch and weaving like honeycomb having a rough surface so as to increase dust collection amount and further to capture more subtle dust, and to an air conditioner using the air filter.

### Description of the Related Art

An air filter that employs a pleated filter member is known as an air filter used for an indoor unit of an air conditioner so as to elongate the lifetime of the filter and to smooth replacement of the filter with its bendable structure. This air filter consists of a pleated filter member which is folded zigzag and has pleats, a bar member provided at a side edge of the pleated filter member and along the pleats, and a frame member provided at one of top edges of the pleats (for example, refer to the Japanese unexamined patent publication JP 2003-74965).

The honeycomb air filter used for a conventional air filter employs a fiber thread having a diameter of 0.18 to 0.22 mm, the air filter includes 30 to 44 threads of the warp and the weft per inch, and one square of the air filter consists of 8 to 12 threads of the warp and the weft. The honeycomb air filter structured like this is formed to have a rough surface of depth of a little less than 1 mm, so as not to release the captured dust.

The conventional air filter needs a pleating process after a weaving process of the air filter in order to increase dust collection amount, which requires additional processing cost. Further, this makes a frame shape complicated for keeping the form of the air filter, and setting operation for inserting the air filter into the frame becomes difficult, which further causes to increase processing cost. Therefore, there is a problem that such an air filter is expensive.

Further, the air filter formed as above includes a gap having an opening area of around 0.9 mm², the dust once filtration efficiency of the filter is not good, and as a result, the devices set downstream of the air filter get dusty easily.

Further, when the weight per unit area is increased to improve the dust once filtration efficiency, the pressure loss of the air filter is increased, and thus the efficiency of a blower of devices using the air filter becomes worse.

Yet further, in the conventional air filter of which one square consists of 8 to 12 threads of the warp and the weft, when the threads of the warp and the weft are thinned and the weight per unit area is increased in order to suppress the pressure loss and to improve the dust once filtration efficiency, the filter becomes flat contrary to the feature of honeycomb weave and have the depth of around 1 mm. The dust collection amount is little, and thus there is a problem that the air filter requires frequent maintenance with a short interval.

### SUMMARY OF THE INVENTION

To solve the above problem, the present invention aims to provide a low-cost air filter and an air conditioner using the filter by forming, at weaving time, a honeycomb air filter which suppresses the increase of pressure loss, improves the dust once filtration efficiency of the air filter and further increases the dust collection amount.

An air filter according to the present invention is made by honeycomb weave consisting of squares and having a rough surface, of which each of the squares is formed by a combination of warp and weft. A thread of the warp that floats the longest rises to the highest; a thread of the weft that floats the longest also rises the highest; the other threads of the warp and the weft gradually rise lower; and a plain weave part becomes the lowest valley. The air filter is woven by the warp and the weft having diameters of equal to or less than 0.22 mm, a dimension of one square is made 9 to 12 mm, and a depth of the roughness is made equal to or greater than 2.5 mm by using equal to or greater than 40 threads of the warp and the weft per inch.

### BRIEF DESCRIPTION OF THE DRAWINGS

A complete appreciation of the present invention and many of the attendant advantages thereof will be readily obtained as the same becomes better understood by reference to the following detailed description when considered in connection with the accompanying drawings, wherein:
Fig. 1 shows a first embodiment and is a perspective view of a honeycomb air filter;
Fig. 2 shows a first embodiment and is an enlarged partial view of the honeycomb air filter;
Fig. 3 compares dust collection efficiencies of the honeycomb air filter of the first embodiment and the conventional air filter;
Fig. 4 shows relation between blowing amount and pressure loss of the honeycomb air filter of the first embodiment; and
Fig. 5 shows a second embodiment and is a cross sectional view of an indoor unit of an air conditioner using the honeycomb air filter of the first embodiment.

### DESCRIPTION OF THE PREFERRED EMBODIMENT

### Embodiment 1.

Hereinafter, a first embodiment of the present invention will be explained by referring to the figures.

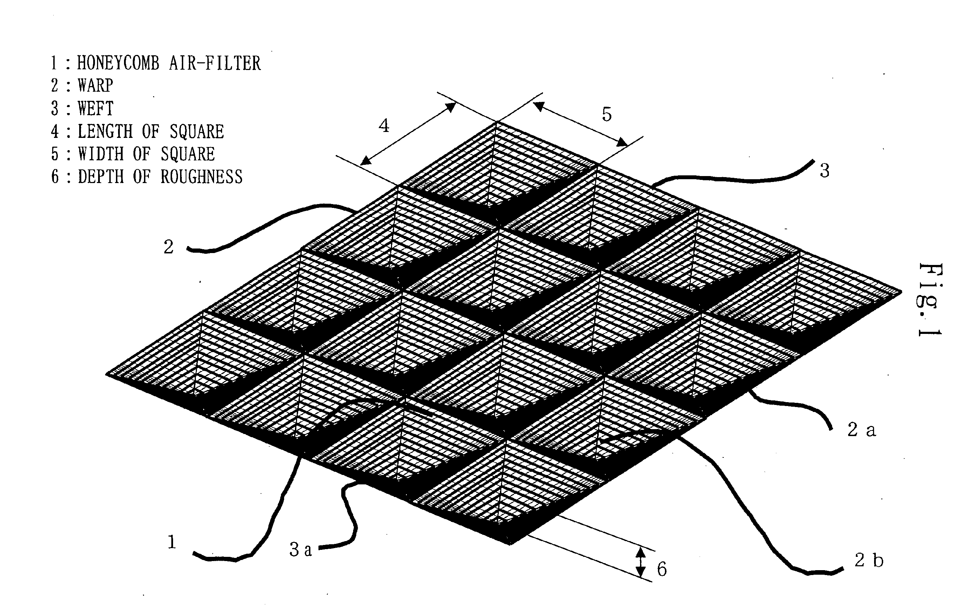

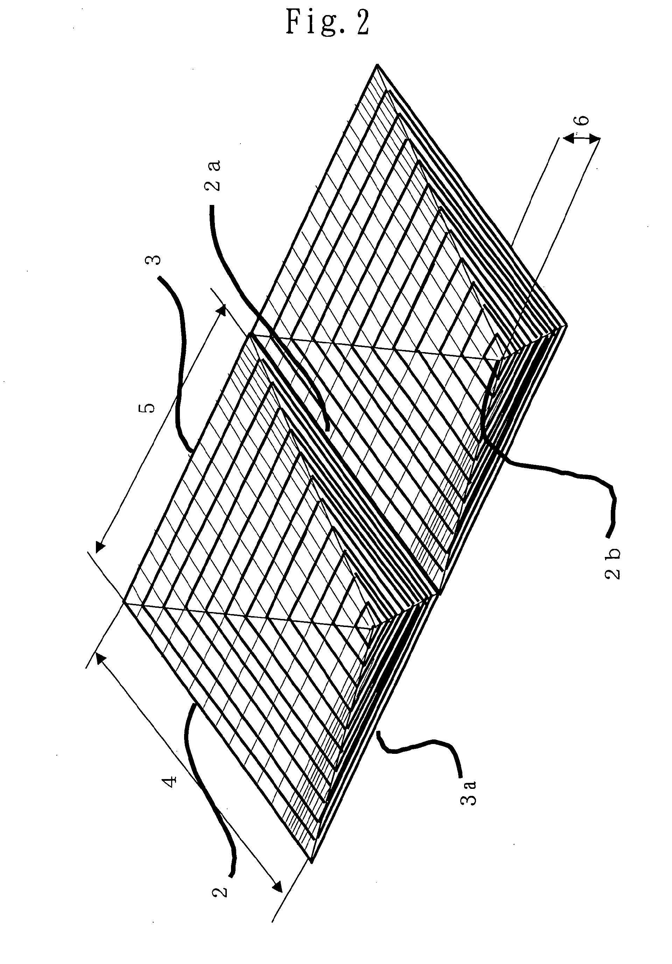

Figs. 1 and 2 show the first embodiment. Fig. 1 is a perspective view of a honeycomb air filter, and Fig. 2 is an enlarged partial view of the honeycomb air filter. As shown in the figures, the honeycomb air filter 1 consists of a combination of warp 2 and weft 3. Among the warp 2, a warp thread 2a that floats the longest rises the highest; among the weft 3, a weft thread 3a that floats the longest also rises the highest. The other threads of the warp 2 and the weft 3 gradually rise lower; a warp thread 2b which rises the lowest forms a valley of plain weave.

The honeycomb air filter 1 is formed by squares having a rough surface of which a peak of one side of the surface becomes a valley of the other side; contrarily, a valley of one side of the surface becomes a peak of the other side. The honeycomb air filter 1 is provided at a suction opening or a blowout opening of a device having a blower in order to capture and filter dust, etc.

The honeycomb air filter 1 is woven by the warp 2 and the weft 3, of which diameters are equal to or less than 0.22 mm; a length 4 and a width 5 of one square are respectively made 9 to 12 mm; a depth 6 of the roughness of the filter is made equal to or greater than 2.5 mm by using equal to or greater than 40 threads of the warp 2 and the weft 3 per inch to capture and hold much amount of dust.

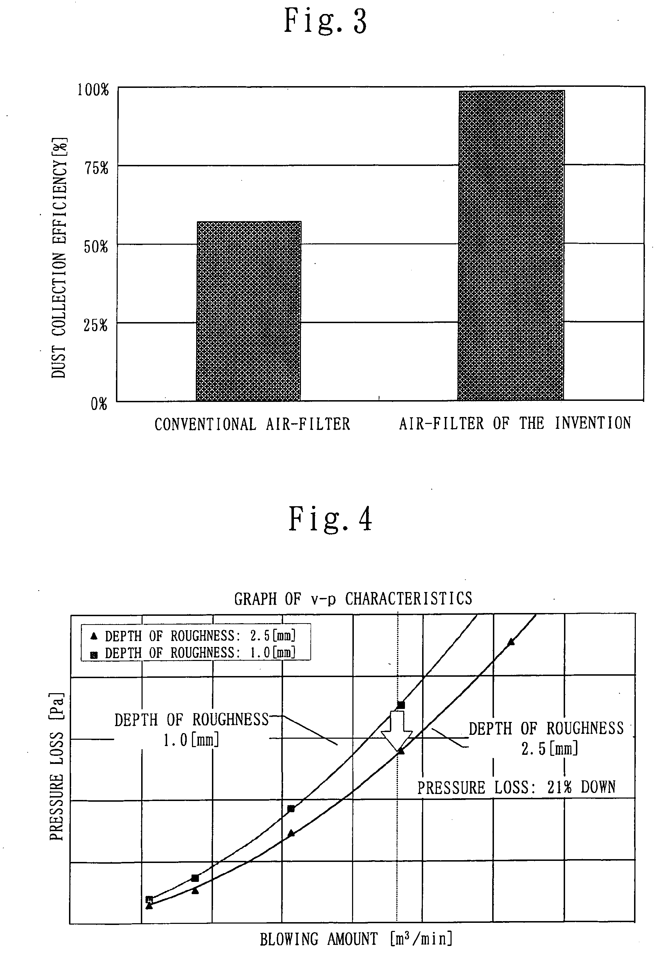

Fig. 3 compares dust collection efficiency of the air filter of the first embodiment and that of the conventional air filter. The honeycomb air filter 1 is woven by the warp 2 and the weft 3, of which diameters are equal to or less than 0.22 mm, a dimension of one square is made 9 to 12 mm, and the roughness of the filter is made equal to or greater than 2.5 mm by using equal to or greater than 40 threads of the warp 2 and the weft 3 per inch. Dust is made fallen from above the honeycomb air filter 1. When the weight of the dust passed through the honeycomb air filter 1 is compared with the initial weight of the dust, it is found that the once filtration efficiency is about 1.7 times as much as that of the conventional filter as shown in Fig. 3. It can be said that most of the dust is filtered by the honeycomb air filter 1, which enables to prevent devices located downstream to the filter from getting dusty.

Further, not only by increasing the weight per unit area of fiber in order to improve the once filtration efficiency, by weaving with the warp 2 and the weft 3 having diameters of equal to or less than 0.22 mm and making the dimension of one square of the honeycomb weave 9 to 12 mm, it is possible to form a rough surface having the peak and the valley even if thin fiber threads are used, so that the depth 6 of the roughness becomes equal to or greater than 2.5 mm. Consequently, the embodiment enables to almost triplicate the dust collection amount per square inch compared with the conventional air filter.

Fig. 4 shows the first embodiment and is a graph showing the relationship between the blowing amount and the pressure loss of the air filter. By making the roughness of surface of the honeycomb air filter 1 large, an effective surface area per square inch becomes 1.1 times as that of the conventional air filter. By using thinned threads of the warp 2 and the weft 3 as shown in Fig. 4, the dimension of the square is adjusted so that the depth of roughness of the surface becomes around 1 mm, and the weight per unit area of fiber is increased. When the pressure loss of this filter is compared with that of the conventional one, the embodiment can reduce around 21% of pressure loss, since the larger effective surface area makes the air speed passing through the honeycomb air filter 1 slow.

Further, the honeycomb air filter 1 is formed to be soft by thinning the threads of the warp 2 and the weft 3 to have diameters of equal to or less than 0.22 mm; however, the honeycomb air filter 1 can be formed harder by differentiating the diameters of the threads of the warp 2 and the weft 3, namely, by making one of the two threads thicker.

Further, if the fiber colors of the warp 2 and the weft 3 is differentiated, another effect can be obtained that it is possible to make the honeycomb air filter 1 having a rough surface appear to have a larger roughness. This makes the structure and the effect of the honeycomb air filter 1 noticeable.

Further, it is possible to form the honeycomb air filter 1 which prevents the pressure loss from increasing and is harder by using different numbers of the threads of the warp 2 and the weft 3 for one square, namely, reducing the number of one having a thicker diameter of the two threads.

Further, by using fiber having at least one of fungicide and antibacterial properties for at least one of the warp 2 and the weft 3, the embodiment can suppress propagation of fungus or bacteria contained in the captured dust.

Yet further, by using fiber having deodorizing property for at least one of the warp 2 and the weft 3, the embodiment can get rid of foul odor contained in the air which passes through the honeycomb air filter 1.

The honeycomb air filter 1 corresponds to an air filter.

The air filter of the embodiment is woven by the warp and the weft having diameters of equal to or less than 0.22 mm, the dimension of one square is made 9 to 12 mm, and the depth of the roughness of the surface is made to be equal to or greater than 2.5 mm by using equal to or greater than 40 threads of the warp and the weft per inch. Therefore, it is possible to capture most of dust by the air filter so as to prevent the devices located downward from getting dusty.

### Embodiment 2.

Hereinafter, a second embodiment of the present invention will be explained by referring to a figure.

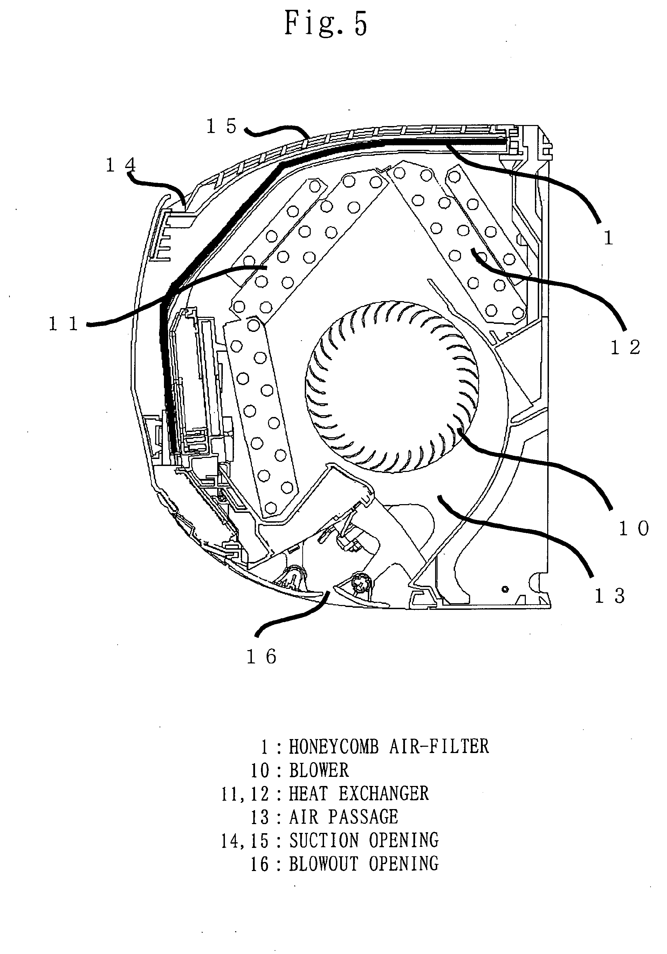

Fig. 5 shows a second embodiment and is a cross sectional view of an air conditioner with an air filter. In Fig. 5, heat exchangers 11 and 12 are placed in the front and the back of the air conditioner, upstream of a blower 10 which is located at an approximate center of the air conditioner, and surrounding the blower 10. Indoor air is sucked from suction openings 14 and 15 which are located in the front and the upper side, is carried through an air passage 13 which is made to pass the air through the heat exchangers 11 and 12, and the conditioned air is blown out to the indoor from a blowout opening 16 which is located downstream of the blower 10. The honeycomb air filter 1 of the first embodiment is placed upstream of the heat exchangers 11 and 12 so as to cover full surfaces of the heat exchangers.

Next, the operation of the air conditioner structured as described above will be explained.

The honeycomb air filter 1 is formed by weaving the warp 2 and the weft 3 having diameters of equal to or less than 0.22 mm, the dimension of one square is made 9 to 12 mm, and the depth 6 of the roughness of surface is made to be equal to or greater than 2.5 mm by using equal to or greater than 40 threads of the warp 2 and the weft 3 per inch so as to collect and keep much dust. The honeycomb air filter 1 is placed upstream of the heat exchangers 11 and 12 so as to cover full surfaces of the heat exchangers 11 and 12, so that dust contained in the indoor air sucked from the blower 10 is captured by the honeycomb air filter 1, which prevents the heat exchangers 11 and 12 from getting dusty and further prevents emission of the dust from the blowout opening 16.

According to the above embodiment, the air conditioner has a container body which is formed by placing the heat exchangers 11 and 12 upstream of the blower 10, setting the air passage 13 so as to pass the indoor air through the heat exchangers 11 and 12, setting the suction openings 14 and 15 in front of and above the blower 10 and the blowout opening 16 below the blower 10. In the air conditioner, the honeycomb air filter 1 of the first embodiment which suppresses the increase of pressure loss and improves the dust collection efficiency and dust collection amount is placed upstream of the heat exchangers 11 and 12 so as to cover the full surfaces of the heat exchangers 11 and 12. Consequently, reduction of performance of the blower 10 which may be caused by the increase of pressure loss due to setting the air filter can be prevented. Dust within the indoor air sucked by the blower 10 can be effectively captured by the honeycomb air filter 1. By increasing the dust collection amount, the maintenance period of the air filter can be lengthened, and further, the heat exchangers 11 and 12 can be prevented from getting dusty. Therefore, the embodiment can suppress reduction of basic performance of the air conditioner due to the aging such as cooling and warming the indoor air using low energy.

In the above embodiment, the separate type air conditioner has been explained as an example of the air conditioner; however, the embodiment is applicable to another type of air conditioners.

Further, in the above embodiment, the air conditioner has been explained as an example device which employs the honeycomb air filter of the first embodiment; however, the air filter of the embodiment is applicable to a suction opening and a blowout opening of devices inside of which air blows such as an air purifier or a dehumidifier, etc and achieves the same effect.

Having thus described several particular embodiments of the present invention, various alterations, modifications, and improvements will readily occur to those skilled in the art. Such alterations, modifications, and improvements are intended to be part of this disclosure, and are intended to be within the spirit and scope of the present invention. Accordingly, the foregoing description is by way of example only, and is not intended to be limiting. The present invention is limited only as defined in the following claims and the equivalents thereto.

## Claims

1. An air filter made by honeycomb weave having a rough surface including squares, of which each of the squares is formed by a combination of warp and weft, a thread of the warp that floats longest rises highest, a thread of the weft that floats longest rises highest, other threads of the warp and the weft gradually rise lower, and a plain weave part becomes a lowest valley, a peak of one side of the rough surface becomes a valley of an other side of the rough surface, and contrarily, a valley of the one side becomes a peak of the other side,
wherein threads of the warp and the weft respectively have diameters of equal to or less than 0.22 mm, and a dimension of the square is made 9 to 12 mm, and a depth of roughness of the rough surface is made equal to or greater than 2.5 mm by using equal to or greater than 40 threads of the warp and the weft per inch.

2. The air filter of claim 1, wherein the threads of the warp and the weft respectively have different diameters.

3. The air filter of claim 1 or 2, wherein the warp and the weft respectively have different colors.

4. The air filter of claim 1, wherein the square includes different numbers of the threads of the warp and the weft.

5. The air filter of one of claims 1 through 4, wherein at least one of the warp and the weft is made by fiber having at least one of fungicide and antibacterial properties.

6. The air filter of one of claims 1 through 4, wherein at least one of the warp and the weft is made by fiber having deodorizing property.

7. An air conditioner formed by a container having a heat exchanger located upstream of a blower, an air passage provided so as to pass indoor air through the heat exchanger, and a suction opening and a blowout opening of the indoor air,
wherein the air conditioner is provided with an air filter of one of claims 1 through 6 upstream of the heat exchanger located at the suction opening.
